# EUROPÄISCHE PATENTSCHRIFT

(11) **EP 3 209 521 B1**
(45) Veröffentlichungstag und Bekanntmachung des Hinweises auf die Patenterteilung: **06.11.2019**
(21) Anmeldenummer: 15804427.1
(22) Anmeldetag: 02.12.2015
(51) Int. Cl.: B60N 2/68, B60N 3/02, B61D 29/00, B61D 33/00, B61D 37/00, B60N 2/24

(54) **FAHRZEUG MIT SITZ**
VEHICLE COMPRISING A SEAT
VÉHICULE ÉQUIPÉ D'UN SIÈGE

(30) Priorität: 19.12.2014 DE 102014226629
(43) Veröffentlichungstag der Anmeldung: 30.08.2017
(73) Patentinhaber: Siemens Mobility GmbH, 81739 München (DE)
(72) Erfinder: STAUB, Ralf, 47799 Krefeld (DE); WEBER-HAMPEL, Wolfgang, 41844 Wegberg (DE)
(86) Internationale Anmeldenummer: PCT/EP2015/078298
(87) Internationale Veröffentlichungsnummer: WO 2016/096419

(56) Entgegenhaltungen:
- DE-A1- 10 130 631
- DE-A1-102005 009 119
- FR-A1- 2 371 312
- US-A1- 2003 209 922
- US-A1- 2011 140 499

## Beschreibung

Die Erfindung bezieht sich auf ein Fahrzeug, insbesondere Schienenfahrzeug, mit zumindest einem Sitz, wobei der Sitz in Fahrzeuglängsrichtung ausgerichtet an einem bogenförmigen Trägerelement montiert ist, das mit zwei voneinander beabstandeten Trägerelementenden an einer Seitenwand des Fahrzeugs befestigt ist.

Ein solches Fahrzeug ist beispielsweise aus der US 2011/140499 A1 oder auch der DE 101 30 631 A1 bekannt.

Bei Schienenfahrzeugen, insbesondere Hochgeschwindigkeitszügen, ist es wünschenswert, den Fahrgästen ausreichenden Stauraum für Gepäck zur Verfügung zu stellen. Üblicherweise werden zu diesem Zweck in den Fahrgasträumen von Hochgeschwindigkeitszügen Längsgepäckablagen oberhalb der Fensterreihen angeordnet, die vom Mittelgang aus zugänglich sind. Die im Seitenwandbereich angebrachten Tragstrukturen dienen zum Teil zusätzlich als Träger für Beleuchtungs- und Anzeigeelemente sowie für Kleiderhaken.

Der Erfindung liegt die Aufgabe zugrunde, die Anordnung und Befestigung von Sitzen im Innenraum eines Fahrzeugs, insbesondere eines Schienenfahrzeugs, hinsichtlich der sich ergebenden Raumnutzungsnutzungsmöglichkeit zu verbessern.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in Unteransprüchen angegeben.

Danach ist erfindungsgemäß vorgesehen, dass das bogenförmige Trägerelement in der Draufsicht Entlang der Fahrzeuglängsrichtung gesehen U-förmig ist und der Sitz - entlang der Fahrzeuglängsrichtung gesehen - im Innenbereich des U-förmigen Trägerelements angeordnet ist und von dem bogenförmigen Trägerelement eingerahmt wird.

Ein wesentlicher Vorteil des erfindungsgemäßen Fahrzeugs ist darin zu sehen, dass das darin vorgesehene bogenförmige Trägerelement als Multifunktionselement genutzt werden kann, das eine Vielzahl an Nutzungsoptionen bietet. Beispielsweise kann - wie weiter unten noch im Detail erläutert werden wird - das bogenförmige Trägerelement als Gepäckablage, zum Halten von Beleuchtungselementen und/oder zum Anbringen von Reservierungsanzeigen dienen.

Ein weiterer wesentlicher Vorteil des erfindungsgemäß vorgesehenen bogenförmigen Trägerelements besteht darin, dass eine Sitzmontage ausschließlich seitenwandseitig möglich ist, so dass der Fußbodenbereich unter den Sitzen abstützungsfrei bzw. freibleiben kann, wodurch beispielsweise weiterer Stauraum für Gepäck geschaffen wird. Darüber hinaus wird die Reinigung des Fahrzeugs bei einer schwebenden Anordnung der Sitze erleichtert.

Bei der vorgesehenen U-förmigen Ausgestaltung kann der Bodenbereich des U-förmigen Trägerelements beispielsweise als Haltestange verwendet werden.

Wie bereits erwähnt, ist es besonders vorteilhaft, wenn der Sitz und das bogenförmige Trägerelement vom Fußboden getrennt sind und diesem gegenüber abstützungsfrei sind.

Bezüglich der Ausgestaltung des bogenförmigen Trägerelements wird es als besonders vorteilhaft angesehen, wenn das bogenförmige Trägerelement einen oberen Trägerabschnitt, einen dazu beabstandeten unteren Trägerabschnitt und einen den oberen und den unteren Trägerabschnitt verbindenden Verbindungsabschnitt aufweist, der Sitz auf dem unteren Trägerabschnitt zwischen dem Verbindungsabschnitt und der Seitenwand befestigt ist, der obere Trägerabschnitt oberhalb des Sitzes angeordnet ist und sich eine Rückenlehne des Sitzes in Richtung des oberen Trägerabschnitts erstreckt.

Vorzugsweise erstrecken sich die Längsrichtung des oberen Trägerabschnitts und die Längsrichtung des unteren Trägerabschnitts senkrecht von der Seitenwand weg in Richtung des Fahrzeuginnenraumes, und der Verbindungsabschnitt wird vorzugsweise von den Trägerabschnitten über dem Fußboden - beabstandet von der Seitenwand - gehalten.

Bezüglich der Anordnung der Teilabschnitte des bogenförmigen Trägerelements ist es besonders vorteilhaft, wenn der obere Trägerabschnitt und der untere Trägerabschnitt horizontal angeordnet sind, sich der Verbindungsabschnitt vertikal oder zumindest auch vertikal erstreckt, die vom Verbindungsabschnitt entfernten Enden des oberen und unteren Trägerabschnitts an vertikal beabstandeten Anbindungsstellen an der Seitenwand befestigt sind und das bogenförmige Trägerelement von der Seitenwand oberhalb des Fußbodens des Fahrzeugs schwebend gehalten wird.

Vorzugsweise bildet der obere Trägerabschnitt eine Gepäckablage oberhalb des Sitzes.

Einfach und damit vorteilhaft lässt sich eine Gepäckablage bilden, wenn der obere Trägerabschnitt zwei abschnittsweise parallele Halterohre umfasst, zwischen denen sich die Gepäckauflagefläche der Gepäckablage befindet.

Üblicherweise wird die Seitenwand des Fahrzeugs ein oder mehrere Fenster aufweisen. In einem solchen Fall ist es besonders vorteilhaft, wenn der vertikale Abstand zwischen den zwei voneinander beabstandeten Trägerelementenden größer als die Fensterhöhe der Fenster ist. Ein entsprechender vertikaler Abstand zwischen den Trägerelementenden ermöglich es nämlich, das bogenförmige Trägerelement bzw. der oder die mit dem bogenförmigen Trägerelement gehaltenen Sitze an beliebiger Stelle innerhalb der Seitenwand zu montieren, also unabhängig davon, ob dort Fenster sind oder nicht.

Für den Fall, dass der Sitz und das bogenförmige Trägerelement vor einem Fenster montiert sind, ist es vorteilhaft, wenn das untere der zwei Trägerelementenden des bogenförmigen Trägerelements unterhalb des Fensters angebracht ist und das obere der zwei Trägerelementenden des bogenförmigen Trägerelements oberhalb des Fensters angebracht ist.

Vorzugsweise bildet das bogenförmige Trägerelement auch eine Haltemöglichkeit für stehende Passagiere. Um eine solche Haltemöglichkeit zu schaffen, wird es als besonders vorteilhaft angesehen, wenn der Verbindungsabschnitt zumindest abschnittsweise als Haltestange für Passagiere ausgebildet ist.

Das bogenförmige Trägerelement dient vorzugsweise darüber hinaus zum Tragen von Beleuchtungseinrichtungen. Diesbezüglich wird es als besonders vorteilhaft angesehen, wenn an dem oberen Trägerabschnitt eine Deckenbeleuchtungseinrichtung und/oder eine Leselampe und/oder eine Fußbodenbeleuchtungseinrichtung angebracht ist und/oder an dem unteren Trägerabschnitt eine Fußbodenbeleuchtungseinrichtung angebracht ist.

Darüber hinaus kann an dem bogenförmigen Trägerelement auch eine Anzeige, insbesondere eine Reservierungsanzeige, vorgesehen sein.

Mit Blick auf eine möglichst große Anzahl von Sitzmöglichkeiten innerhalb des Fahrzeugs wird es als vorteilhaft angesehen, wenn an dem unteren Trägerabschnitt des bogenförmigen Trägerelements zwei oder mehr Sitze nebeneinander und jeweils in Fahrzeuglängsrichtung ausgerichtet montiert sind. So ist es in vorteilhafter Weise möglich, vier Sitze, paarweise in Dos-ä-dos-Ausrichtung, an einem Trägerelement zu befestigen.

Die Erfindung wird nachfolgend anhand von Ausführungsbeispielen näher erläutert; dabei zeigen beispielhaft
- Figur 1: ein Ausführungsbeispiel für ein erfindungsgemäßes Schienenfahrzeug, das mit Ausführungsbeispielen für erfindungsgemäße Sitzträgermodule ausgestattet ist,
- Figur 2: das Schienenfahrzeug gemäß Figur 1 bei Betrieb von Leuchteinrichtungen der Sitzträgermodule,
- Figur 3: ein Ausführungsbeispiel für ein erfindungsgemäßes Schienenfahrzeug, bei dem Sitzträgermodule in Vis-à-vis-Ausrichtung angeordnet sind, und
- Figur 4: ein Ausführungsbeispiel für ein erfindungsgemäßes Schienenfahrzeug, bei dem Sitzträgermodule Rücken-zu-Rücken (Dos-à-dos), also mit ihren Rückenlehnen aneinander angrenzend, montiert sind.

In den Figuren werden der Übersicht halber für identische oder vergleichbare Komponenten stets dieselben Bezugszeichen verwendet.

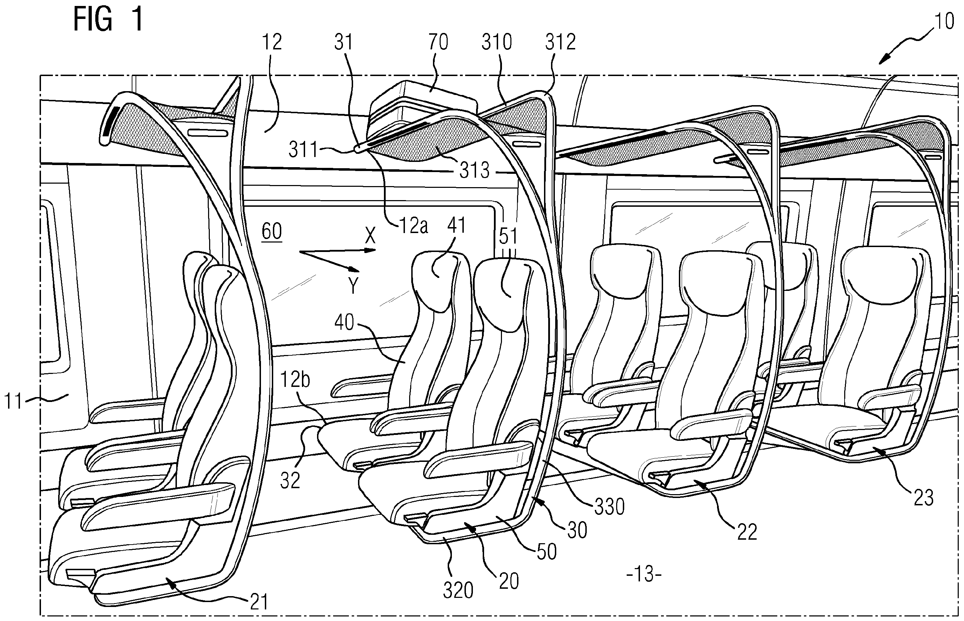

Die Figur 1 zeigt einen Innenraum 11 eines Schienenfahrzeugs 10 in einer dreidimensionalen Darstellung schräg von der Seite. Bei dem Schienenfahrzeug 10 handelt es sich vorzugsweise um einen Hochgeschwindigkeitszug.

Man erkennt in der Figur 1 eine Vielzahl an Sitzträgermodulen 20, 21, 22 und 23, die an einer Seitenwand 12 des Schienenfahrzeugs 10 montiert sind. Die Sitzträgermodule 20, 21, 22 und 23 können beispielsweise baugleich ausgeführt sein; die nachfolgenden Erläuterungen im Zusammenhang mit dem Sitzträgermodul 20 gelten somit für die übrigen Sitzträgermodule 21, 22 und 23 entsprechend.

Das Sitzträgermodul 20 weist ein bogenförmiges Trägerelement 30 auf, an dem zwei Sitze 40 und 50 montiert sind. Die beiden Sitze 40 und 50 sind jeweils in Fahrzeuglängsrichtung X ausgerichtet und bezüglich der Fahrzeugquerrichtung Y des Schienenfahrzeugs 10 nebeneinander angeordnet. Der Sitz 40 bildet dabei einen innenliegenden Sitz zwischen dem außenliegenden Sitz 50 und der Seitenwand 12 des Schienenfahrzeugs 10.

Das bogenförmige Trägerelement 30 bildet eine Cantilever-Tragstruktur, die mit einem oberen Trägerelementende 31 an einer oberen Anbindungsstelle 12a an der Seitenwand 12 und mit einem unteren Trägerelementende 32 an einer unteren Anbindungsstelle 12b an der Seitenwand 12 gehalten wird.

Die beiden Anbindungsstellen 12a und 12b an der Seitenwand 12 gewährleisten ein schwebendes Halten des bogenförmigen Trägerelements 30 und damit des Sitzträgermoduls 20 insgesamt über dem Fußboden 13 des Schienenfahrzeugs 10. Ein weiteres Abstützen des Sitzträgermoduls 20 unmittelbar auf dem Fußboden 13 ist nicht erforderlich und wird vorzugsweise vermieden, um den Raum - insbesondere zu Reinigungszwecken - unterhalb des Sitzträgermoduls 20 freizuhalten.

Die Figur 1 lässt erkennen, dass der Abstand zwischen dem oberen Trägerelementende 31 und dem unteren Trägerelementende 32 bzw. zwischen der oberen Anbindungsstelle 12a und der unteren Anbindungsstelle 12b vorzugsweise größer als die Fensterhöhe von Fenstern 60 ist, die im Bereich der Seitenwand 12 des Schienenfahrzeugs 10 angeordnet sind. Ist nämlich der Abstand zwischen den beiden Anbindungsstellen 12a und 12b größer als die Fensterhöhe der Fenster 60, so ist es möglich, das Sitzträgermodul 20 an beliebiger Stelle - in Fahrzeuglängsrichtung X des Schienenfahrzeugs 10 gesehen - zu montieren, also in Bereichen zwischen benachbarten Fenstern 60 bzw. in den sogenannten Fensterstielbereichen oder alternativ direkt vor einem Fenster 60, wie dies in der Figur 1 gezeigt ist.

Das bogenförmige Trägerelement 30 des Sitzträgermoduls 20 weist einen oberen Trägerabschnitt 310 sowie einen unteren Trägerabschnitt 320 auf, die gemeinsam einen Verbindungsabschnitt 330 halten. Die Längsrichtung des oberen Trägerabschnitts 310 und die Längsrichtung des unteren Trägerabschnitts 320 erstrecken sich vorzugsweise senkrecht von der Seitenwand 12 des Schienenfahrzeugs 10 weg in Richtung des Innenraums 11 und halten den Verbindungsabschnitt 330 über dem Fußboden 13 beabstandet von der Seitenwand 12.

Die beiden Trägerabschnitte 310 und 320 sind vorzugsweise horizontal angeordnet, und der Verbindungsabschnitt 330 erstreckt sich vorzugsweise vertikal oder zumindest abschnittsweise vertikal. Der Verbindungsabschnitt 330 ist vorzugsweise als Haltestange für Passagiere ausgebildet.

Wie sich in der Figur 1 erkennen lässt, ist das durch die beiden Trägerabschnitte 310 und 320 sowie den Verbindungsabschnitt 330 gebildete bogenförmige Trägerelement 30 - in der Draufsicht entlang der Fahrzeuglängsrichtung X gesehen - U-förmig und rahmt die beiden Sitze 40 und 50 in seinem Innenbereich ein. Um dieses Einrahmen der beiden Sitze 40 und 50 zu ermöglichen, sind die beiden Sitze 40 und 50 auf dem unteren Trägerabschnitt 320 derart montiert, dass sich deren Rückenlehnen 41 bzw. 51 in Richtung des oberen Trägerabschnitts 310 erstrecken.

Bei dem Ausführungsbeispiel gemäß Figur 1 weist der obere Trägerabschnitt 310 zwei Halterohre 311 und 312 auf, die abschnittsweise parallel zueinander verlaufen und eine Gepäckauflage 313 halten. Auf der Gepäckauflage 313 können Gepäckstücke gelagert werden, von denen in der Figur 1 beispielhaft eines gezeigt und dort mit dem Bezugszeichen 70 gekennzeichnet ist.

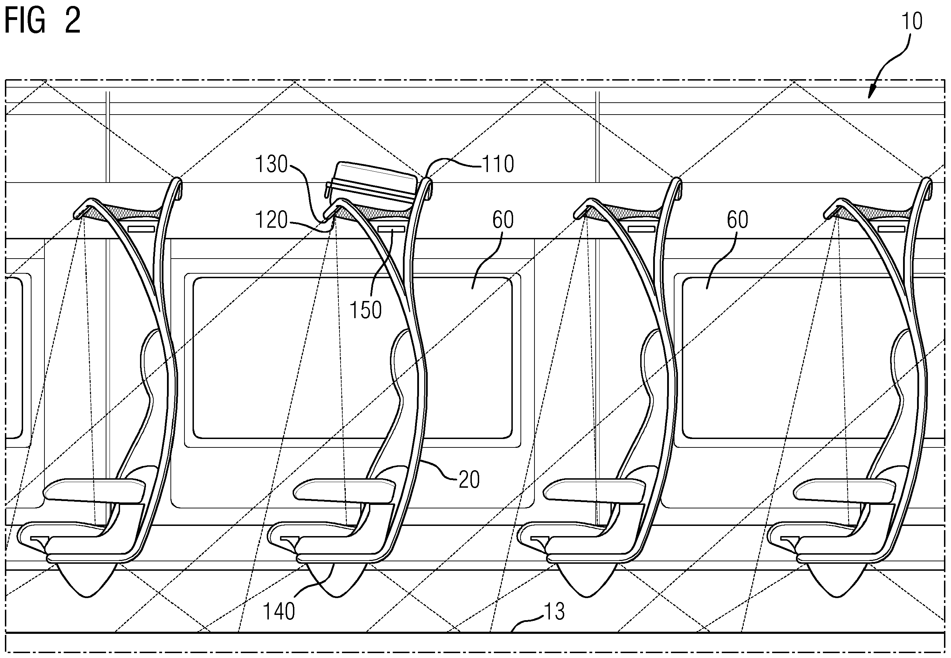

Die Figur 2 zeigt das Schienenfahrzeug 10 mit dem Sitzträgermodul 20 gemäß Figur 1 nochmals in einer anderen Sicht. Es ist zu erkennen, dass das Sitzträgermodul 20 mit einer Vielzahl an Beleuchtungseinrichtungen ausgestattet ist, die zum Teil an dem oberen Trägerabschnitt 310 des bogenförmigen Trägerelements 30 und zum Teil an dem unteren Trägerabschnitt 320 des bogenförmigen Trägerelements 30 montiert sind (vgl. Figur 1). So zeigt die Figur 2 eine Deckenbeleuchtungseinrichtung 110 zur Beleuchtung der Fahrzeugdecke des Schienenfahrzeugs 10, eine Leselampe 120 sowie eine Fußbodenbeleuchtungseinrichtung 130 zur Beleuchtung des Fußbodens 13 des Schienenfahrzeugs 10, die alle an dem oberen Trägerabschnitt 310 des bogenförmigen Trägerelements 30 befestigt sind. An dem unteren Trägerabschnitt 320 des bogenförmigen Trägerelements 30 ist eine weitere Fußbodenbeleuchtungseinrichtung 140 zur Beleuchtung des Fußbodens 13 angebracht.

Das Sitzträgermodul 20 kann darüber hinaus mit einer Reservierungsanzeige zur Anzeige des Reservierungszustands der Sitze 40 und 50 des Sitzträgermoduls 20 ausgestattet sein. Eine solche Reservierungsanzeige 150 ist vorzugsweise im Bereich des Verbindungsabschnitts 330 und besonders bevorzugt im oberen Bereich des Verbindungsabschnitts 330 angebracht.

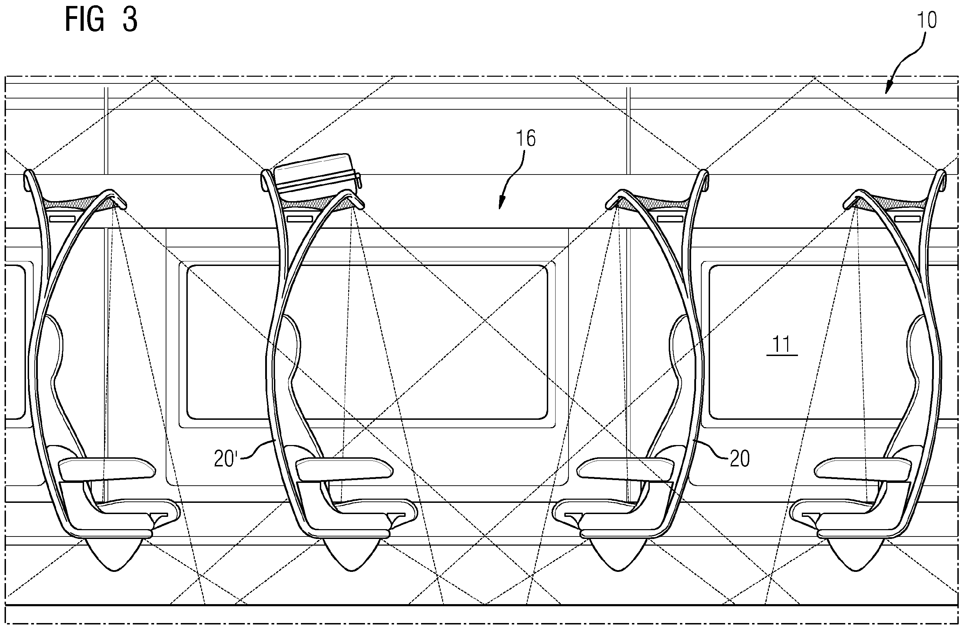

Die Figur 3 zeigt beispielhaft, dass die Sitzträgermodule, wie sie in den Figuren 1 und 2 gezeigt sind, auch in anderer Weise relativ zueinander angeordnet sein können, als dies in den Figuren 1 und 2 dargestellt ist. So lässt sich in der Figur 3 erkennen, dass das im Zusammenhang mit den Figuren 1 und 2 im Detail erläuterte Sitzträgermodul 20 alternativ mit einem anderen, spiegelsymmetrisch aufgebauten Sitzträgermodul 20' in Vis-ä-vis-Anordnung montiert sein kann, wodurch mit den beiden Sitzträgermodulen 20 und 20' ein virtuelles offenes Abteil 16 innerhalb des Innenraums 11 des Schienenfahrzeugs 10 geschaffen wird. Im Übrigen gelten die obigen Ausführungen bezüglich der Ausgestaltung des Sitzträgermoduls 20 für die beiden Sitzträgermodule 20 und 20' gemäß Figur 3 entsprechend.

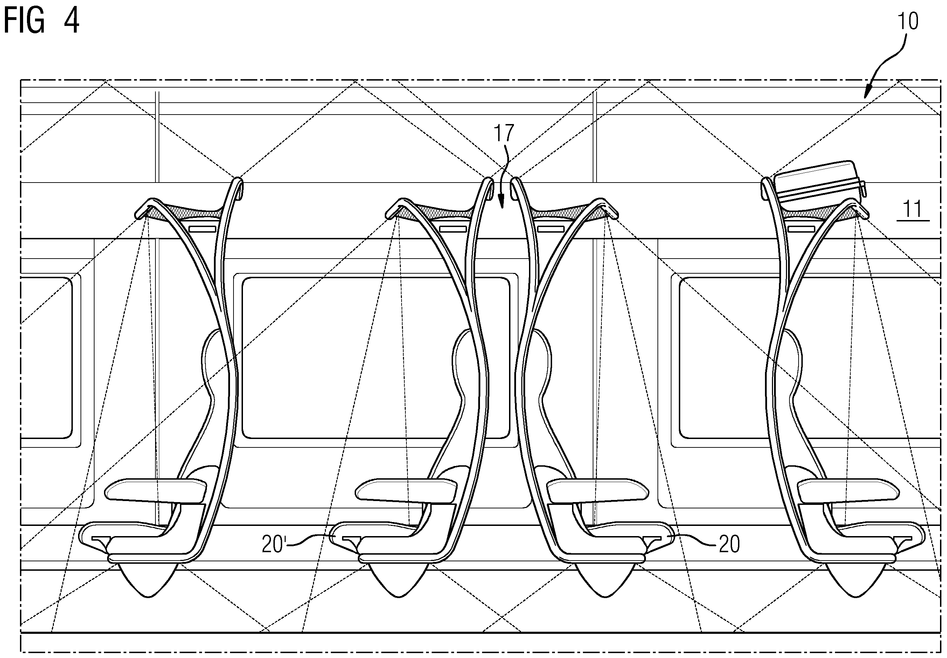

Die Figur 4 zeigt eine weitere Möglichkeit, wie Sitzträgermodule 20 bzw. spiegelsymmetrisch ausgestaltete Sitzträgermodule 20' relativ zueinander angeordnet sein können. So lässt sich in der Figur 4 eine Rücken-zu-Rücken-Anordnung 17 Dos-à-dos-Anordnung) zweier Sitzträgermodule 20 und 20' erkennen, bei der die Rückenlehnen 51 der außenliegenden Sitze 50 sowie die in der Figur 4 verdeckten Rückenlehnen 41 der beiden innenliegenden Sitze 40 der beiden Sitzträgermodule 20 und 20' aneinander angrenzen. Bezüglich der Ausgestaltung der Sitzträgermodule 20 und 20' gelten die obigen Erläuterungen im Zusammenhang mit der Ausgestaltung des Sitzträgermoduls 20 gemäß den Figuren 1 und 2 entsprechend.

Die Sitzträgermodule 20, 20', 21, 22 und 23 gemäß den Figuren 1 bis 4 können als vorgefertigte Einheiten an der Seitenwand 12 des Schienenfahrzeugs 10 montiert werden; alternativ ist es möglich, die einzelnen Komponenten separat zu montieren, also zunächst die beiden Trägerabschnitte 310 und 320 an der Seitenwand 12 zu befestigen, den Verbindungsabschnitt 330 mit den beiden Trägerabschnitten 310 und 320 zu verbinden sowie nachfolgend die Sitze 40 und 50 zu montieren.

Die im Zusammenhang mit den Figuren 1 bis 4 beschriebenen Ausführungsbeispiele für Sitzträgermodule können eine oder mehrere der folgenden Vorteile aufweisen:
- Quergepäckablage und Sitzanbindung können in einer gemeinsamen Cantilever-Tragstruktur integriert werden.
- Es wird ein individueller, dem Sitzplatz zugeordneter und leicht zugänglicher Gepäckstauraum geschaffen. Das Gepäck befindet sich unmittelbar über dem Sitzplatz und damit im Hoheitsraum des Fahrgastes.
- Bedienung der Gepäckablage kann vor dem Sitz stehend erfolgen, der Gangbereich muss dazu nicht betreten werden, wodurch ein besserer Fahrgastfluss erreicht wird.
- Es wird ein Bauraumgewinn zwischen den Sitzreihen oberhalb der Fenster erzielt, der z. B. zur Klimaluft- oder Kabelführung genutzt werden kann.
- Es werden erweiterte Haltemöglichkeiten durch Nutzung der Tragstruktur als durchgehende Haltestange bereitgestellt.
- Im Crash-Fall gewährt das bogenförmige Trägerelement bzw. die durch diese gebildete Tragstruktur einen guten Überkopfschutz für sitzende Fahrgäste gegen umher fliegenden Gepäckstücken.
- Durch Aufnahme und Verteilung von Leuchten innerhalb der räumlich von der Seitenwand bis an den Gang reichenden Tragstruktur ist eine optimale Anordnung von Haupt-, Lese- und Akzentbeleuchtung möglich.
- Sitzplatzreservierungsanzeigen können gut ablesbar in der Tragstruktur in Augenhöhe am Gang positioniert werden.
- Es kann ein Raumeindruck mit Abteilcharakter bei Vis-àvis-Anordnung der Sitzträgermodule erreicht werden.
- Kleiderhaken können an der Tragstruktur unmittelbar dem jeweiligen Sitzplatz zugeordnet montiert werden.
- Es lässt sich eine Vereinfachung der Sitzkonstruktion erreichen, weil dort (bzw. an den Sitzen) Haltegriff, Reservierungsanzeige und Lesebeleuchtung entfallen können.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Fahrzeug, insbesondere Schienenfahrzeug (10), mit zumindest einem Sitz (40, 50), wobei der Sitz (40, 50) in Fahrzeuglängsrichtung (X) ausgerichtet an einem bogenförmigen Trägerelement (30) montiert ist, das mit zwei voneinander beabstandeten Trägerelementenden (31, 32) an einer Seitenwand (12) des Fahrzeugs befestigt ist,
**dadurch gekennzeichnet, dass**
- das bogenförmige Trägerelement (30) in der Draufsicht entlang der Fahrzeuglängsrichtung (X) gesehen U-förmig ist und
- der Sitz (40, 50) - entlang der Fahrzeuglängsrichtung (X) gesehen - im Innenbereich des U-förmigen Trägerelements (30) angeordnet ist und von dem bogenförmigen Trägerelement (30) eingerahmt wird.

2. Fahrzeug nach Anspruch 1,
**dadurch gekennzeichnet, dass**
der Sitz (40, 50) und das bogenförmige Trägerelement (30) vom Fußboden (13) getrennt sind und diesem gegenüber abstützungsfrei sind.

3. Fahrzeug nach einem der voranstehenden Ansprüche,
**dadurch gekennzeichnet, dass**
- das bogenförmige Trägerelement (30) einen oberen Trägerabschnitt (310), einen dazu beabstandeten unteren Trägerabschnitt (320) und einen den oberen und den unteren Trägerabschnitt (310, 320) verbindenden Verbindungsabschnitt (330) aufweist,
- der Sitz (40, 50) auf dem unteren Trägerabschnitt (320) zwischen dem Verbindungsabschnitt (330) und der Seitenwand (12) befestigt ist,
- der obere Trägerabschnitt (310) oberhalb des Sitzes (40, 50) angeordnet ist und
- sich eine Rückenlehne (41, 51) des Sitzes (40, 50) in Richtung des oberen Trägerabschnitts (310) erstreckt.

4. Fahrzeug nach Anspruch 3,
**dadurch gekennzeichnet, dass**
sich die Längsrichtung des oberen Trägerabschnitts (310) und die Längsrichtung des unteren Trägerabschnitts (320) senkrecht von der Seitenwand (12) weg in Richtung des Fahrzeuginnenraumes erstrecken und der Verbindungsabschnitt (330) von den Trägerabschnitten (310, 320) über dem Fußboden (13) - beabstandet von der Seitenwand (12) - gehalten wird.

5. Fahrzeug nach Anspruch 3 oder 4,
**dadurch gekennzeichnet, dass**
- der obere Trägerabschnitt (310) und der untere Trägerabschnitt (320) horizontal angeordnet sind,
- sich der Verbindungsabschnitt (330) vertikal oder zumindest auch vertikal erstreckt,
- die vom Verbindungsabschnitt (330) entfernten Enden des oberen und unteren Trägerabschnitts (310, 320) an vertikal beabstandeten Anbindungsstellen (12a, 12b) an der Seitenwand (12) befestigt sind und
- das bogenförmige Trägerelement (30) von der Seitenwand (12) oberhalb des Fußbodens des Fahrzeugs schwebend gehalten wird.

6. Fahrzeug nach einem der Ansprüche 3 bis 5,
**dadurch gekennzeichnet, dass**
der obere Trägerabschnitt (310) eine Gepäckablage oberhalb des Sitzes (40, 50) bildet.

7. Fahrzeug nach Anspruch 6, **dadurch gekennzeichnet, dass**
der obere Trägerabschnitt (310) zwei abschnittsweise parallele Halterohre (311, 312) umfasst, zwischen denen sich die Gepäckauflagefläche der Gepäckablage befindet.

8. Fahrzeug nach einem der voranstehenden Ansprüche,
**dadurch gekennzeichnet, dass**
- die Seitenwand (12) ein oder mehrere Fenster (60) aufweist und
- der vertikale Abstand zwischen den zwei voneinander beabstandeten Trägerelementenden (31, 32) größer als die Fensterhöhe der Fenster (60) ist.

9. Fahrzeug nach einem der voranstehenden Ansprüche,
**dadurch gekennzeichnet, dass**
- der Sitz (40, 50) und das bogenförmige Trägerelement (30) vor einem Fenster (60) montiert sind,
- wobei das untere der zwei Trägerelementenden (31, 32) des bogenförmigen Trägerelements (30) unterhalb des Fensters (60) angebracht ist und
- wobei das obere der zwei Trägerelementenden (31, 32) des bogenförmigen Trägerelements (30) oberhalb des Fensters (60) angebracht ist.

10. Fahrzeug nach einem der Ansprüche 3 bis 7,
**dadurch gekennzeichnet, dass**
der Verbindungsabschnitt (330) zumindest abschnittsweise als Haltestange für Passagiere ausgebildet ist.

11. Fahrzeug nach einem der Ansprüche 3 bis 7,
**dadurch gekennzeichnet, dass**
- an dem oberen Trägerabschnitt (310) eine Deckenbeleuchtungseinrichtung (110) und/oder eine Leselampe (120) und/oder eine Fußbodenbeleuchtungseinrichtung (130) angebracht ist und/oder
- an dem unteren Trägerabschnitt (320) eine Fußbodenbeleuchtungseinrichtung (140) angebracht ist.

12. Fahrzeug nach einem der Ansprüche 3 bis 7,
**dadurch gekennzeichnet, dass**
an dem unteren Trägerabschnitt (320) des bogenförmigen Trägerelements (30) zwei oder mehr Sitze (40, 50) nebeneinander und jeweils in Fahrzeuglängsrichtung (X) ausgerichtet montiert sind.

## Claims

1. Vehicle, in particular rail vehicle (10), having at least one seat (40, 50), wherein the seat (40, 50) is mounted oriented in the longitudinal direction (X) of the vehicle on a curved support element (30) which is fastened to a side wall (12) of the vehicle with two spaced-apart support element ends (31, 32), **characterized in that**
- the curved support element (30) is U-shaped in top view as seen along the longitudinal direction (X) of the vehicle, and
- the seat (40, 50) - as seen along the longitudinal direction (X) of the vehicle - is arranged in the inner region of the U-shaped support element (30) and is framed by the curved support element (30).

2. Vehicle according to Claim 1, **characterized in that** the seat (40, 50) and the curved support element (30) are separated by the floor (13) and are support-free in relation thereto.

3. Vehicle according to either of the preceding claims, **characterized in that**
- the curved support element (30) has an upper support portion (310), a lower support portion (320) which is spaced apart therefrom and a connecting portion (330) connecting the upper and the lower support portions (310, 320),
- the seat (40, 50) is fastened on the lower support portion (320) between the connecting portion (330) and the side wall (12),
- the upper support portion (310) is arranged above the seat (40, 50) and
- a backrest (41, 51) of the seat (40, 50) extends in the direction of the upper support portion (310).

4. Vehicle according to Claim 3, **characterized in that** the longitudinal direction of the upper support portion (310) and the longitudinal direction of the lower support portion (320) extend away perpendicularly from the side wall (12) in the direction of the vehicle interior, and the connecting portion (330) is held - spaced apart from the side wall (12) - above the floor (13) by the support portions (310, 320).

5. Vehicle according to Claim 3 or 4, **characterized in that**
- the upper support portion (310) and the lower support portion (320) are arranged horizontally,
- the connecting portion (330) extends vertically or at least also vertically,
- the ends of the upper and lower support portion (310, 320) remote from the connecting portion (330) are fastened to the side wall (12) at vertically spaced-apart attachment points (12a, 12b), and
- the curved support element (30) is held by the side wall (12) in a manner floating above the floor of the vehicle.

6. Vehicle according to one of Claims 3 to 5, **characterized in that** the upper support portion (310) forms a luggage rack above the seat (40, 50).

7. Vehicle according to Claim 6, **characterized in that** the upper support portion (310) comprises two holding tubes (311, 312) which are parallel in sections and between which the luggage supporting surface of the luggage rack is located.

8. Vehicle according to one of the preceding claims, **characterized in that**
- the side wall (12) has one or more windows (60), and
- the vertical distance between the two spaced-apart support element ends (31, 32) is greater than the window height of the windows (60).

9. Vehicle according to one of the preceding claims, **characterized in that**
- the seat (40, 50) and the curved support element (30) are mounted in front of a window (60),
- wherein the lower of the two support element ends (31, 32) of the curved support element (30) is attached below the window (60), and
- wherein the upper of the two support element ends (31, 32) of the curved support element (30) is attached above the window (60).

10. Vehicle according to one of Claims 3 to 7, **characterized in that** the connecting portion (330) designed at least in sections as a handrail for passengers.

11. Vehicle according to one of Claims 3 to 7, **characterized in that** a ceiling lighting device (110) and/or a reading light (120) and/or a floor lighting device (130) are/is attached to the upper support portion (310) and/or
- a floor lighting device (140) is attached to the lower support portion (320).

12. Vehicle according to one of Claims 3 to 7, **characterized in that** two or more seats (40, 50) are mounted next to one another and in each case oriented in the longitudinal direction (X) of the vehicle on the lower support portion (320) of the curved support element (30).

## Revendications

1. Véhicule, notamment véhicule (10) ferroviaire, comprenant au moins un siège (40, 50), le siège (40, 50), orienté dans la direction (X) longitudinale du véhicule, étant monté sur un élément (30) de poutrelle en forme d'arc, qui est fixé, par deux extrémités (31, 32) à distance l'une de l'autre de l'élément de poutrelle, à une paroi (12) latérale du véhicule,
**caractérisé en ce que**
- l'élément (30) de poutrelle en forme d'arc est, considéré en vue en plan suivant la direction (X) longitudinale du véhicule, en forme de U et
- le siège (40, 50) est - considéré suivant la direction (X) longitudinale du véhicule - disposé dans la partie intérieure de l'élément (30) de poutrelle en forme de U et est encadré par l'élément (30) de poutrelle en forme d'arc.

2. Véhicule suivant la revendication 1,
**caractérisé en ce que**
le siège (40, 50) et l'élément (30) de poutrelle en forme d'arc sont séparés du plancher (13) et sont sans appui par rapport à celui-ci.

3. Véhicule suivant l'une des revendications précédentes,
**caractérisé en ce que**
- l'élément (30) de poutrelle en forme d'arc a un tronçon (310) supérieur de poutrelle, un tronçon (320) inférieur de poutrelle à distance de celui-ci et un tronçon (330) de liaison reliant les tronçons (310, 320) supérieur et inférieur de la poutrelle,
- le siège (40, 50) est fixé sur le tronçon (320) inférieur de la poutrelle entre le tronçon (330) de liaison et la paroi (12) latérale,
- le tronçon (310) supérieur de la poutrelle est disposé au-dessus du siège (40, 50) et
- un dossier (41, 51) du siège (40, 50) s'étend dans la direction du tronçon (310) supérieur de la poutrelle.

4. Véhicule suivant la revendication 3,
**caractérisé en ce que**
la direction longitudinale du tronçon (310) supérieur de la poutrelle et la direction longitudinale du tronçon (320) inférieur de la poutrelle s'étendent perpendiculairement en s'éloignant de la paroi (12) latérale en direction de l'espace intérieur du véhicule et le tronçon (330) de liaison est maintenu par les tronçons (310, 320) de la poutrelle au-dessus du plancher (13) - à distance de la paroi (12) latérale -.

5. Véhicule suivant la revendication 3 ou 4,
**caractérisé en ce que**
- le tronçon (310) supérieur de la poutrelle et le tronçon (320) inférieur de la poutrelle sont disposés horizontalement,
- le tronçon (330) de liaison s'étend verticalement ou au moins à peu près verticalement,
- les extrémités, loin du tronçon (330) de liaison, du tronçon (310) supérieur de la poutrelle et du tronçon (320) inférieur de la poutrelle, sont fixées à la paroi (12) latérale en des points (12a, 12b) de liaison à distance verticalement et
- l'élément (30) de poutrelle en forme d'arc est maintenu flottant par la paroi (12) latérale au-dessus du plancher du véhicule.

6. Véhicule suivant l'une des revendications 3 à 5,
**caractérisé en ce que**
le tronçon (310) supérieur de la poutrelle forme un dépôt à bagage au-dessus du siège (40, 50).

7. Véhicule suivant la revendication 6,
**caractérisé en ce que**
le tronçon (310) supérieur de la poutrelle comprend deux tubes (311, 312) de maintien, parallèles par endroit, entre lesquels se trouve la surface du dépôt à bagage.

8. Véhicule suivant l'une des revendications précédentes,
**caractérisé en ce que**
- la paroi (12) latérale a une ou plusieurs fenêtres (60) et
- la distance verticale entre deux éléments (31, 32) de poutrelle à distance l'un de l'autre est plus grande que la hauteur des fenêtres (60).

9. Véhicule suivant l'une des revendications précédentes,
**caractérisé en ce que**
- le siège (40, 50) et l'élément (30) de poutrelle en forme d'arc sont montés devant une fenêtre (60),
- dans lequel l'extrémité inférieure des deux extrémités (31, 32) de l'élément (30) de poutrelle en forme d'arc est en-dessous de la fenêtre (60) et
- dans lequel l'extrémité supérieure des deux extrémités (31, 32) de l'élément (30) de poutrelle en forme d'arc est mise au-dessus de la fenêtre (60).

10. Véhicule suivant l'une des revendications 3 à 7,
**caractérisé en ce que**
le tronçon (330) de liaison est constitué, au moins par endroit, sous la forme d'une barre de retenue pour des passagers.

11. Véhicule suivant l'une des revendications 3 à 7,
**caractérisé en ce que**
- sur le tronçon (310) supérieur de la poutrelle est mis un dispositif (110) d'éclairage de plafond et/ou une lampe (120) de lecture et/ou un dispositif (130) d'éclairage de plancher et/ou
- sur le tronçon (320) inférieur de la poutrelle est mis un dispositif (140) d'éclairage de plancher.

12. Véhicule suivant l'une des revendications 3 à 7,
**caractérisé en ce que**,
sur le tronçon (320) inférieur de la poutrelle de l'élément (30) de poutrelle en forme d'arc, sont montés deux ou plusieurs sièges (40, 50) côte à côte et orientés chacun dans la direction (X) longitudinale du véhicule.
